# EUROPEAN PATENT APPLICATION

(11) **EP 4 470 856 A1**
(43) Date of publication of application: **04.12.2024**
(21) Application number: 24172814.6
(22) Date of filing: 26.04.2024
(51) Int. Cl.: B60T 17/08, B60T 17/10, F16D 65/28

(54) **PNEUMATIC SERVICE BRAKE ACTUATOR**

(30) Priority: 27.04.2023 IN 202341030435
(71) Applicant: ZF Commercial Vehicle Control Systems India Limited, Chennai, Tamil Nadu 600 058 (IN)
(72) Inventor: Mani, Arunkumar, 639006 KARUR (IN); Mahalingam, Viswanathan, 603001 CHENGALPATTU (IN)
(74) Representative: Eisenführ Speiser

(57) **Abstract**

The invention relates to a pneumatic service brake actuator (1) for a brake system (100) of a vehicle, in particular of a commercial vehicle, the brake actuator (1) comprising a push rod (12) that is configured to transfer a braking force to a brake mechanism (101) of the brake system (100), a first service brake chamber (3) that is configured to receive pressurized air, a first piston head (19) that is operatively coupled to the push rod (12) and configured to move the push rod (12) from a retracted position (R) towards an extended position (E) along a push rod axis (X) when pressurized, and a second service brake chamber (5) that is configured to receive pressurized air, a second piston head (37) operatively coupled to the push rod (12) and also configured to move the push rod (12) from the retracted position (R) towards the extended position (E) when pressurized, wherein the first and second service brake chambers (3, 5) are arranged to act pneumatically parallel to one another. It is suggested that the first piston head (19) and the second piston head (37) slidingly and sealingly engage a corresponding first side wall (27) and second side wall (51) of their respective first and second service brake chamber (3, 5).

## Description

The invention relates to a pneumatic service brake actuator for a brake system of a vehicle, in particular of a commercial vehicle, the brake actuator comprising a push rod that is configured to transfer a braking force to a brake mechanism of the brake system, a first service brake chamber that is configured to receive pressurized air, a first pistopn head that is operatively coupled to the push rod and configured to move the push rod from a retracted position towards an extended position along a push rod axis when pressurized, and a second service brake chamber that is configured to receive pressurized air, a second piston head operatively coupled to the push rod and also configured to move the push rod from the retracted position towards the extended position when pressurized, wherein the first and second service brake chambers are arranged to act pneumatically parallel to one another.

In a vehicle, in particular a commercial vehicle, the pneumatic service brake actuator is designed to generate a force which moves the push rod and ultimately causes the brake mechanism to generate a stopping or decelerating effect which slows down or stops the vehicle. In this, the required amount of air pressure is provided by a pneumatic pressure source in the vehicle in generally known manner.

With increasing vehicle weights, larger brake forces are necessary to reliably provide the required braking performance. At the same time, increasing complexity of vehicles, in particular also of commercial vehicles, leads to space restrictions inside the vehicle, thus limiting the options for mounting the pneumatic service brake actuators. Typically, only restricted mounting space is available inside the vehicle in a radial direction, i.e. transverse to the push rod axis.

CA 2 846 895 A1 shows a pneumatic actuator having two pneumatic pressure chambers arranged pneumatically parallel to one another and coaxially with respect to a common piston axis. The architecture shown in CA 2 846 895 appears generally suited for use in commercial vehicles as well since it provides high actuation force while at the same time maintaining a compact envelope in the radial direction transverse to the piston axis.

However, the overall space envelope of the brake actuator is still significant, since both pressure chambers require separate air supply through a separate air supply though a respective air inlet.

It was thus an object of the invention to provide an improved pneumatic actuator, in particular for use in a brake system of a vehicle which alleviates the disadvantages known from the prior art as far as possible. In particular, it was an object of the invention to provide an improved pneumatic service brake actuator which allows for a more compact design without sacrificing actuation force.

The invention achieves the aforementioned object by suggesting a pneumatic service brake actuator according to claim 1. In particular, both, the first piston head and the second piston head slidingly and sealingly engage a corresponding first and second side wall of their respective first and second service brake chamber. In other words, the first piston head is in a sealing and sliding engagement with the first side wall in the first service brake chamber, and the second piston head is in sliding and sealing engagement with the second side wall in the second service brake chamber. The invention is based upon the finding that the radial footprint can be improved, i.e. rendered smaller, by using sliding piston setups as defined hereinabove instead of diaphragms. The piston head in a diaphragm setup has a comparatively low ratio a/b of a) effective piston surface to b) sidewall diameter of the service brake chamber, because the diaphragm needs radial clearance between the piston head and the side wall in order to be able to elastically deform during the movement of the piston head. By relying on a sliding piston concept for both service brake chambers, said ration a/b is approximately 1/1 since the piston head diameter may be almost equal to the inner side wall diameter. This leads to an improved force transmission when compared to diaphragm assemblies. Furthermore, it has been found that using a double piston setup instead of a diaphragm setup allows for the force distribution to be almost constant and more linear over the entire stroke length than would be possible with a diaphragm design.

In summary, the tandem sliding piston design suggested by the invention allows for an improved force transmission at identical or smaller radial dimensions when compared to the initially mentioned prior art designs.

In a preferred embodiment, the first and second service brake chambers are arranged coaxially with respect to the push rod axis.

In a further preferred embodiment, the second piston head is part of a service brake piston assembly that comprises a sealing arrangement, Said seal is sealingly disposed between the second piston head and the second sidewall so as to divide the second service brake chamber into a pressurized portion and a non-pressurized portion. Preferably, the second service brake chamber comprises a return spring that is operatively coupled to the service brake piston assembly and configured to urge the service brake piston assembly towards its retracted position. The return spring is preferentially arranged in the non-pressurized portion of the first service brake chamber.

In a further preferred embodiment, the first piston had comprises a sealing arrangement sealingly disposed between the first piston head and the first sidewall so as to divide the first service brake chamber into a pressurized portion an d a non-pressurized portion. Preferentially, the first service brake chamber comprises a return spring that is operatively coupled to the first piston head and configured to urge the first piston head towards its retracted position. The return spring is preferably arranged in the non-pressurized portion of the first service brake chamber.

In a further preferred embodiment, the non-pressurized portion is in fluid communication with a breather. Preferably, the non-pressurized portion of the first service brake chamber is in fluid communication with a first breather, and the non-pressurized portion of the second service brake chamber is in fluid communication with a second breather. Preferably, the first breather and the second breather are independent of one another. These independent breathers render the use of internal or external breather pipings in corresponding valves unnecessary contribute to keeping the radial envelope of the brake actuator small.

In a further preferred embodiment, the breather comprises a particle filter. By outfitting the first or second breather with a particle filter, it can be ensured that the amount of dust or dirt particles which might enter the service brake chamber together with the air which is forced into the non-pressurized portion during the retraction movement of the respective piston heads, is kept to a minimum.

Preferably, the breather is configured to filter the air bidrectionally. During the stroke phase, the volume of the non-pressurized portion is reduced due to the movement of the piston head. The air inside the non-pressurized portion escapes the service brake chambers through the respective breathers. The breather is thus exposed to bidirectional air flow. This is beneficial insofar that at least part of the particles that have been retained in the breather during the retraction movement will be blown off again during the stroke phase, because air flow is passing the particle filter in the opposite direction.

In a further preferred embodiment, the breather, or at least one of the breathers in case multiple breathers are present, is arranged in the respective sidewall, preferably radially.

Preferably, the radially arranged breather is dimensioned such that its radial extension relative to the push rod axis is smaller than the radial envelope of the brake actuator.

Preferably, the radial envelope of the brake actuator is defined by the radially outermost dimensions of the service brake chambers or of respective housing portions associated to the service brake chambers, as will be explained for preferred embodiments in more detail herein below.

In a further preferred embodiment, the breather, or at least one of the breathers in case multiple breathers are present, is arranged on the service brake chamber, preferably axially. By arranging the breather axially with respect to the push rod axis, it does not contribute to the radial envelope of the brake actuator at all.

In a further preferred embodiment, the brake actuator comprises a first housing portion, which comprises the first service brake chamber, and a second housing portion comprising the second brake chamber, wherein the first and second housing portions are mounted adjacent to one another. Preferably, the first and second housing portions directly abut against each other.

In a further preferred embodiment, the service brake piston assembly comprises a shaft that is configured to penetrate the first service brake chamber and engage the first piston head, and the brake actuator further comprises a shaft sleeve, wherein the shaft slidingly and sealingly engages the shaft sleeve, wherein preferably, the shaft sleeve is fastened to the first housing portion and extends into the second housing portion. This design of the shaft sleeve allows for maximizing the stroke lengths of those piston head arrangements inside the respective brake chambers.

In a further preferred embodiment, the first and/or second housing portions are formed as sheet metal parts, in particular as deep-drawn sheet metal parts, or as cast parts, wherein each sidewall has a cylindrical portion that extends over at least the stroke length in the direction of the push rod axis.

While the housing portions of the brake actuator may just as well be formed as cast metal parts, it has been found that sheet metal offers an unmatched cost efficiency while still allowing for precise manufacturing. The sheet metal allows for easy permanent fixation to one another, for example by welding or soldering.

The cylindrical portion of each sidewall defines on its inner side the counter surface for the piston heads and their sealing elements, respectively.

The first and/or second housing portions further preferably comprise an outer end portion facing away from the respective other housing portion, a collar formed in the respective end portion, and an end cover that is sealingly fastened to the housing portion inside the respective collar. The collar portion may also easily be formed by deep drawing/cupping, and may be formed in the same working step as the overall form of the sheet metal housing portion. Likewise, the end cover may be formed by deep drawing cupping in a cost efficient, yet sufficiently precise manner.

The end cover may be fastened to the housing portion by conventional fastening means such as nuts and bolts. Other means of permanent or releasable fastening can also be employed here. Preferably, the collar extends radially outwards of the side walls of the housing portions, defining a cylindrical and/or non-cylindrical periphery, such as for example a polygonal flange shape having rounded edges. In preferred embodiments, the outer end portions and/or the end covers define the radial envelope of the brake actuator, i.e. no structural element extends radially further away from the push rod axis than the outer end portions of the housing portions or end covers.

In a further preferred embodiment, the brake actuator comprises a singular air inlet port configured to connect the brake actuator to a source of pressurized air, and an internal fluid passage that connects the first and second service brake chambers to as to be in fluid communication with one another. Preferably, the air inlet port at the same time is also an air outlet port. During the stroke phase of the brake actuator, air is being supplied inwards through the air inlet port into the service brake chambers. During the retraction phase, air is allowed to exit the service brake chamber through that same air port which in that phase functions as an air outlet port. By using an internal fluid passage to establish fluid communication between the two service brake chambers, the radial envelope of the brake actuator may be kept small.

In a further preferred embodiment, the shaft is hollow, and the internal fluid passage is arranged within the shaft. In other words, the inner confines of the hollow shaft function as the internal fluid passage in this embodiment.

In a further preferred embodiment, the air inlet port is arranged to directly open into the second service brake chamber. Preferably, the air inlet port is arranged axially on the second service brake chamber, such as preferably in the respective end cover.

The invention has hereinabove been described according to a first aspect relating to the brake actuator itself. In a second aspect, the invention relates to a brake system for a vehicle, in particular a commercial vehicle, comprising at least one brake mechanism configured to apply a braking force to decelerate the vehicle, and a brake actuator operatively coupled to the brake mechanism such as to actuate the brake mechanism.

The invention achieves the initially mentioned object for the second aspect by suggesting that the brake actuator is formed according to any one of the preferred embodiments described hereinabove for the first aspect.

The brake system of the second aspect shares the benefits and advantages of the brake actuator of the first aspect. Preferred embodiments of the brake actuator of the first aspect are at the same time also preferred embodiment of the brake system of the second aspect and vice versa. To avoid unnecessary repetition, reference is therefore made to the description here and above for those embodiments.

The invention will herein after be described with reference to a preferred embodiment and the attached figures, wherein
- Fig. 1: shows a service brake actuator of a preferred embodiment in a first perspective view,
- Fig. 2: shows the brake actuator of Fig. 1 in a second perspective view,
- Fig. 3: shows the brake actuators of Figs. 1 and 2 in a frontal side view, and
- Fig. 4: shows the service brake actuator of Figs. 1-3 in a cross-sectional view.

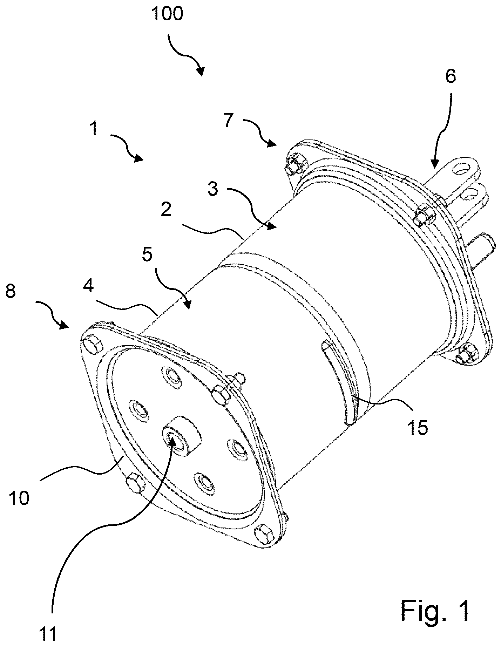

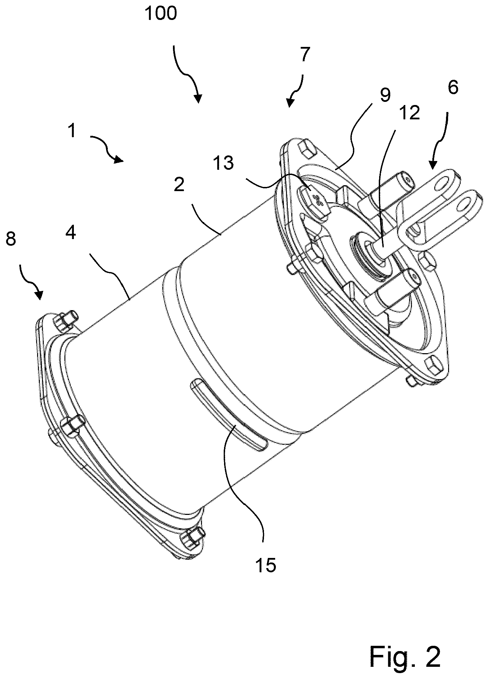

Figs. 1 to 3 show the outside layout of a pneumatic service brake actuator 1 for a brake system 100 of a vehicle, in particular, of a commercial vehicle. The brake actuator 1 comprises a first housing portion 2 made of a deep-drawn sheet metal, and a second housing portion 4 attached to the first housing portion 2, wherein the second housing portion 4 is also preferably made of a deep-drawn sheet metal. As an alternative to deep-drawing, the housing portions may be produced in another generally known fashion such as for example by casting, machining etc..

The first housing portion 2 defines a first service brake chamber 3 on its inside, and the second housing portion 4 defines a second service brake chamber 5 on its inside.

The first housing portion 2 comprises a first end portion 7, and on an opposite side of the brake actuator 1, the second housing portion 4 comprises a second end portion 8. As can be seen from the Figs. 1-3, the end portions 7, 8 are respectively covered by end covers 9, 10 which sealingly engage the housing portions 2, 4 in the respective end portions 7, 8.

The brake actuator 1 comprises a singular air inlet port 11 which is configured to connect to a source of pressurized fluid, for example, a pneumatic pressure supply line of a vehicle.

The brake actuator 1 is effective to convert the pressurized air supplied through the singular air inlet port 11 into a stroke movement of a push rod 12 which extends into and out of the first housing portion 2 and the respective end cover 9. The push rod 12 is configured to couple to a brake mechanism 101 and for this purpose comprises a connection interface 6. The first and second housing portions 2, 4 and with them the first and second service brake chambers 3, 5, are arranged coaxially with respect to a push rod axis X. The push rod axis X, also referred to as stroke axis, defines the general direction of movement of the push rod 12.

The brake actuator 1 comprises, for each service brake chamber 3, 5, an individual breather 13, 15. A first breather 13 is arranged axially on the first service brake chamber. In particular, the first breather 13 is mounted to the end cover 9 and is in fluid communication with the first service brake chamber 3. The breathers 13, 15 are independent of one another.

The second breather 15 is in fluid communication with the second service brake chamber 5. As a variation to the setup of the first breather 13, the second breather 15 is arranged radially on the second service brake chamber 5, in particular mounted to a cylindrical portion of the second housing portion 4.

Both breathers 13, 15 are configured to allow air to pass through both in an outward direction and in an inward direction. At the same time, both breathers 13, 15 are at least partially made of a particle filter material that is configured to retain dust and dirt particles. That way, the breathers are effective to prevent those dust and dirt particles from entering into the respective service brake chambers 3, 5.

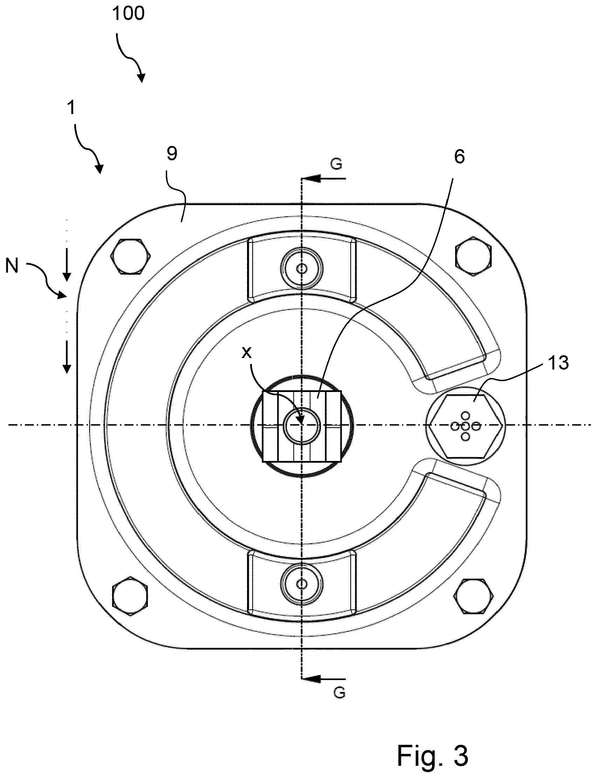

As can be seen from Fig. 3, the second breather 15 is dimensioned radially such that it does not extend beyond a radial envelope N. The second breather 15 may alternatively have any desired shape within generally known design constraints. The radial envelope N of the brake actuator 1 is defined by the outer dimensions of the end portions 7, 8, or end covers 9, 10, respectively.

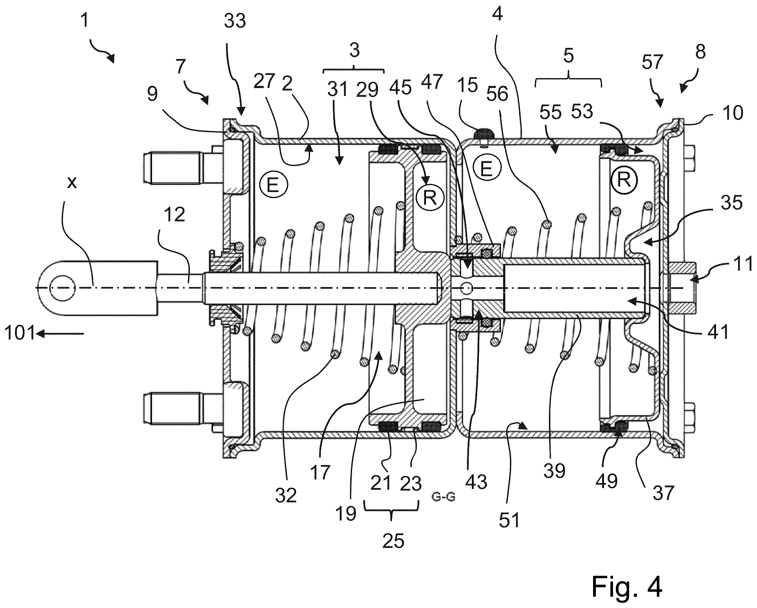

Turning now to the inner workings of the brake actuator 1, Fig. 4 shows a cross section along line G-G indicated in Fig. 3. The first service brake chamber 3 comprises a first piston assembly 17 comprising a first piston head 19 which is coupled to the push rod 12. Movement of the first piston head 19 moves the entire piston assembly 17 and thus the push rod 12 into the direction of the push rod axis X.

The first piston head 19 comprises a first sealing arrangement 25 which sealingly and slidingly engages a first side wall 27. Due to the first sealing arrangement 25, the first service brake chamber 3 is divided into a pressurized portion 29 and a non-pressurized portion 31. Upon pressurization of the brake actuator 1, the first piston head 19 moves from a retracted position R, shown in Fig. 4, towards an extended position E by sliding along the first side wall 27. The effective surface area of the first piston assembly 17 remains constant over the entire stroke length. In the first end portion 7, the first housing part 2 comprises a collar 33 which extends circumferentially. The first end cover 9 is mounted inside the collar 33 and secured by suitable means, such as, for example, nuts and bolts. To the extent necessary, the connection between end cover 9 and collar 33 is sealed off with suitable sealing elements.

Similar to the design of the first housing portion 2, the second housing portion 4 and the second service brake chamber 5 comprise on its inside a second piston assembly 35. The second piston assembly 35 comprises a second piston head 37 which is coupled to a shaft 39. The shaft 39 is configured to penetrate into the first service brake chamber 3 so as to engage the first piston assembly 17 for movement of the push rod 12 in the direction of axis X. The shaft 39 is hollow and comprises an internal fluid passage 41. The shaft 39 further comprises a manifold section 43 which comprises a plurality of outlet portions 45. The hollow shaft 39 is effective to conduct pressurized fluid entering the second service brake chamber 5 through the singular air inlet port 11 via the outlets 45 into the first service brake chamber 3 as soon as the shaft 39 has penetrated sufficiently far into the first service brake chamber 3 to establish fluid communication between the outlets 45 and the first service brake chamber 3.

The shaft 39 is sealingly and slidingly held by a shaft sleeve 47. The shaft sleeve 47 is fastened to the first housing portion 2 and extends into the second housing portion 4 to allow for optimized stroke length/actuator length ratios.

The second piston head 37 comprises a second sealing arrangement 49 which in the example shown in Fig. 4 consists of a singular combined sealing/guide element. The second sealing arrangement 49 is effective to divide the second service brake chamber 5 into a pressurized portion 53 and a non-pressurized portion 55. The second sealing arrangement 49 sealingly and slidably engages a second side wall 51 of the second housing portion 49.

To perform a stroke movement of the push rod 12 and to actuate the brake mechanism 101 of the brake system 100, both piston assemblies 17, 35 are pushed from the retracted position R towards the extended position E by supplying pressurized air through the singular air inlet port 11. Air which resides in the respective non-pressurized portions 31, 55 escapes through the breathers 13, 15 provided on the respective housing portions 2, 4.

After a stroke phase has ended and the brake mechanism 101 is to be released, the pressure in the pressurized portions 29, 53 is reduced. Movement of the piston assemblies 17, 35 can now be effected by respective return springs 32, 56. The first service brake chamber 3 comprises a first return spring 32 which is effective to push the first piston head 19 towards the retracted position. Likewise, the return spring 56 arranged in the second service brake chamber 5 is effective to push the second piston head 37 towards the retracted position R. Buildup of unwanted vacuum inside the non-pressurized portions 31, 55 is prevented again by the breathers 13, 15 which allow gas to permeate into the non-pressurized portions 31, 55 of the first and second service brake chambers 3, 5. Dust and dirt particles are prevented from entering the non-pressurized portions by the particle filter material of the breathers 13, 15. These particles are at least partly blown off again during subsequent stroke actions of the brake actuator 1 when air is pushed again through the breathers 13, 15 in the outward direction.

In the preferred embodiment shown in Figs. 1-4, an actuator design which one singular air inlet port 11 is presented. It shall, however, be understood that it would also be possible to provide pressurized air to the respective pressurized portions 29, 53 of the service brake chambers 3, 5 with dedicated air inlet ports.

Also, it is to be noted that the sealing arrangements 25, 49 shown in Fig. 4 are exemplary sealing arrangements. It is to be understood that within the invention, the second sealing arrangement 49 might also be formed in similar fashion as the first sealing arrangement 25 and vice versa.

### List of reference signs (Part of the description)

- 1: pneumatic service brake actuator
- 2: first housing portion
- 3: first service brake chamber
- 4: second housing portion
- 5: second service brake chamber
- 6: connection interface
- 7: first end portion
- 8: second end portion
- 9: end cover, first housing portion
- 10: end cover, second housing portion
- 11: air inlet port
- 12: push rod
- 13: breather
- 15: breather
- 17: first piston assembly
- 19: first piston head
- 25: first sealing arrangement
- 27: first side wall
- 29: pressurized portion, 1^{st} service brake chamber
- 31: non-pressurized portion, 1^{st} service brake chamber
- 32: return spring, 1^{st} service brake chamber
- 33: collar, first housing portion
- 35: second piston assembly
- 37: second piston head
- 39: shaft
- 41: fluid passage
- 43: manifold section
- 45: outlet portion
- 47: shaft sleeve
- 49: second sealing arrangement
- 51: second side wall
- 53: pressurized portion, 2^{nd} service brake chamber
- 55: non-pressurized portion, 2^{nd} service brake chamber
- 56: return spring, 2^{nd} service brake chamber

- 100: brake system
- 101: brake mechanism

- E: extended position
- N: radial envelope
- R: retracted position
- X: push rod axis

## Claims

1. A pneumatic service brake actuator (1) for a brake system (100) of a vehicle, in particular of a commercial vehicle, the brake actuator (1) comprising:
- a push rod (12) that is configured to transfer a braking force to a brake mechanism (101) of the brake system (100),
- a first service brake chamber (3) that is configured to receive pressurized air, a first piston head (19) that is operatively coupled to the push rod (12) and configured to move the push rod (12) from a retracted position (R) towards an extended position (E) along a push rod axis (X) when pressurized, and
- a second service brake chamber (5) that is configured to receive pressurized air, a second piston head (37) operatively coupled to the push rod (12) and also configured to move the push rod (12) from the retracted position (R) towards the extended position (E) when pressurized,
- wherein the first and second service brake chambers (3, 5) are arranged to act pneumatically parallel to one another,
**characterized in that** the first piston head (19) and the second piston head (37) slidingly and sealingly engage a corresponding first side wall (27) and second side wall (51) of their respective first and second service brake chamber (3, 5).

2. The brake actuator (1) of claim 1,
**characterized in that** the first and second service brake chambers (3, 5) are arranged coaxially with respect to the push rod axis (X).

3. The brake actuator (1) of claim 1 or 2,
**characterized in that** the second piston head (37) is part of a service brake piston assembly (31) that comprises a sealing arrangement (49) sealingly disposed between the second piston head (37) and the second side wall (51) so as to divide the second service brake chamber (5) into a pressurized portion (53) and a non-pressurized portion (55).

4. The brake actuator (1) of any one of the preceding claims,
**characterized in that** the first piston head (19) comprises a sealing arrangement (25) sealingly disposed between the first piston head (19) and the first side wall (27) so as to divide the first service brake chamber (3) into a pressurized portion (29) and a non-pressurized portion (31).

5. The brake actuator (1) of claim 3 or 4,
**characterized in that** the non-pressurized portion (31, 55) is in fluid communication with a breather (13,15).

6. The brake actuator (1) of claim 5,
**characterized in that** the breather (13,15) comprises a particle filter.

7. The brake actuator (1) of claim 5 or 6,
**characterized in that** the breather (15) is arranged on the respective sidewall (51), preferably radially.

8. The brake actuator (1) of any one of claims 5 to 7,
**characterized in that** the breather (13) is arranged on the service brake chamber (3), preferably axially.

9. The brake actuator (1) of any one of the preceding claims,
**characterized in that** the brake actuator (1) comprises a first housing portion (2) comprising the first service brake chamber (3), and a second housing portion (4) comprising the second service brake chamber (5), wherein the first and second housing portions (2, 4) are mounted adjacent to one another.

10. The brake actuator (1) of claim 9,
**characterized in that** a second service brake piston assembly (35) comprises a shaft (39) that is configured to penetrate into the first service brake chamber (3) and engage the first piston head (19), and
the brake actuator (1) comprises a shaft sleeve (47), wherein the shaft (39) slidingly and sealingly engages the shaft sleeve (47), wherein preferably, the shaft sleeve (47) is fastened to the first housing portion (2) and extends into the second housing portion (4).

11. The brake actuator (1) of any one of the preceding claims,
**characterized in that** the first and/or second housing portions (2, 4) are formed as sheet metal parts, or as cast parts, wherein each side wall has a cylindrical portion that extends over at least the stroke length in the direction of the push rod axis.

12. The brake actuator (1) of claim 10,
**characterized in that** the brake actuator (1) comprises one or more air inlet ports (11), preferably a singular air inlet port (11), configured to connect the brake actuator (1) to a source of pressurized air, and an internal fluid passage (41) that connects the first and second service brake chambers (3, 5) so as to be in fluid communication with one another.

13. The brake actuator (1) of claim 12,
**characterized in that** the shaft (39) is hollow, and the internal fluid passage (41) is arranged within the shaft (39).

14. The brake actuator (1) of claim 12 or 13,
**characterized in that** the air inlet port (11) is arranged to directly open into the second service brake chamber (5).

15. A brake system (100) for a vehicle, in particular a commercial vehicle, comprising at least one brake mechanism (101) configured to apply a braking force to decelerate the vehicle, and a brake actuator (1) operatively coupled to the brake mechanism (100) such as to actuate the brake mechanism (100),
**characterized in that** the brake actuator (1) is formed according to any one of the preceding claims.
